# EUROPEAN PATENT SPECIFICATION

(11) **EP 3 344 386 B1**
(45) Date of publication and mention of the grant of the patent: **22.09.2021**
(21) Application number: 16778443.8
(22) Date of filing: 01.09.2016
(51) Int. Cl.: B01J 37/04, B01J 37/08, B01J 19/24, B01J 23/50, B01J 23/72, B01J 23/755, B01J 35/04, B01J 35/10, B01J 37/00, B22F 3/10, C04B 38/06

(54) **PROCESS FOR THE PREPARATION OF OPEN-CELL METAL FOAMS**
VERFAHREN ZUR HERSTELLUNG VON OFFENZELLIGEN METALLSCHÄUMEN
PROCÉDÉ DE PRÉPARATION DE MOUSSES MÉTALLIQUES À CELLULES OUVERTES

(30) Priority: 04.09.2015 HU 1500403
(43) Date of publication of application: 11.07.2018
(73) Proprietor: Mol Hungarian Oil and Gas Public Limited Company (55%), 1117 Budapest (HU); Bay Zoltán Nonprofit Ltd (45%), 1116 Budapest (HU)
(72) Inventor: KAPTAY, György, H-3525 Miskolc (HU); SZABÓ, Dávid, H-3534 Miskolc (HU); SZABÓ, József, H-4242 Hajdúhadház (HU); PETRÓ, József Csaba, H-2440 Százhalombatta (HU); ISAÁK, György, H-2440 Százhalombatta (HU)
(74) Representative: Marmarosi, Tamasné
(86) International application number: PCT/HU2016/000056
(87) International publication number: WO 2017/037482

(56) References cited:
- EP-A1- 2 883 632
- GB-A- 1 568 598
- US-A- 3 345 440
- US-A- 3 897 221
- US-A1- 2003 044 301
- US-A1- 2004 013 606
- US-A1- 2004 123 980
- US-A1- 2008 148 940
- US-A1- 2011 042 512
- US-A1- 2012 178 951

## Description

This invention relates to self-supporting, self-cleaning open-cell metal foams containing transition metals and/or non-metals, to the process for their preparation and to their application.

During catalytic reduction and oxidation tasks of various purposes, media which poison or desintegrate the catalyst may occur. Extremely alkaline or acidic media, or the presence of components irreversibly reacting with the active centres, mean danger not only for the stability of the active centres, but also for the integrity of the support. In the aforementioned catalytic processes most generally catalysts with large specific surface areas are formulated to support skeletons made of alumina, titania, active charcoal or silicate. These catalysts, however in strongly alkaline medium fall into their elements, destroy, because the medium leaches the support skeleton below the active metal. The catalyst thus will be unable to continue its task, and in addition, the dissolved material will involve further complication to fulfil the targeted operation.

By active metals we understand all those elements which are capable to catalyze oxidative or reductive reactions in liquid or gaseous media. These metals, not exclusively, but typically belong to the group of alkaline earth metals and transition metals, such as calcium, magnesium, iron, copper, nickel, cobalt, molybdenum, chromium, manganese, etc. in elemental or in oxide (or compound) forms, as well as noble metals, such as platinum, palladium, gold, rhenium, etc., and carefully planned mixtures (alloys) of them. The applicability of the catalysts containing these elements is known to those skilled in the art. (Z.Y. Ding, M.A. Frisch, L. Li, E.F. Gloyna, Ind. Eng. Chem. Res., 35 (1996), p. 3257, Luck, F: Wet air oxidation: past, present and future, Catalysis Today, 53., 1, 81-91, 1999).

In the laboratory, in short time experimental works these catalysts are fully suitable for the task, but they did not prove to work well in long-time, industrial-scale heterogeneous catalyses, where for example, the oxidative decomposition of some stubborn systems was the object. The generally known and efficient Raney-nickel and other catalysts are applied in these operations in a way that the catalyst is mixed with the material to be destroyed, the reaction is carried out, and the catalyst, together with other solid components is filtered off the system. Recovery of the catalyst by filtration, washing and suitable regeneration processes is, however, so complex and complicated that it may rarely be effected economically. This experience forced us to develop a heterogeneous catalyst which may be applied in tube reactor, which has long lifetime even under continuous operation and is easy to regenerate on the spot.

Raney-nickel catalyst is the most widely used catalyst for hydrogenation. Its registration number is: CAS 7440-02-0**.** It is a generally introduced, basic catalyst. Usually this is the first catalyst an expert is choosing to carry out the reference reaction in new hydrogenation tasks. The general method to prepare hydrogenating supported catalysts consisting of nickel and other metals mentioned in the introduction, is that the active material is coated on an aluminum support and aluminum is leached then out. According to that process approximately the same amounts of aluminum and nickel are placed into melting form, mixed and melted (or into the aluminum melt are added the nickel and the other components) and then, after cooling the mixture is finely milled to powder (diameter: 10-100 µm). From the mixture the greater part of the aluminum is leached out with concentrated or less concentrated sodium hydroxide, accompanied by hydrogen evolution.

The remaining structure is spongy, this is why the fine, powdery material of porous structure obtained after drying, which exhibits very large specific surface area and excellent activity, is called spongy nickel catalyst (Z.Y. Ding, M.A. Frisch, L. Li, E.F. Gloyna, Ind. Eng. Chem. Res., 35 (1996), p. 3257, Luck, F: Wet air oxidation: past, present and future, Catalysis Today, 53., 1, 81-91, 1999). This catalyst has very favourable specific surface area in the range of 40-120 m²/g. The general Raney-nickel catalyst is characterized by 2-8 nm pore diameter and 0.05-0.2 cm³/g pore volume. The 10-250 micron average particle diameter is advantageous for use in the laboratory or in the fine chemistry. It ensures large contact area between the reagent and the substrate to promote the known nickel catalyzed reactions.

To those skilled in the art is well-known that during the production of the catalyst, sodium hydroxide has to be applied in an appropriate concentration and excess, in order to avoid the precipitation of the aluminum compound which would obstruct these extremely fine pores, closing thus the contact between the active metal and the reagent. For the preparation of an efficient catalyst made of nickel-aluminum 1:1 ratio alloy, Murray Raney applied for patent in 1925 (US 1,563,787) which still offers determining knowledge even for the expert of today. The catalyst is in such an extent active and pyrophoric that the powdery particles are expediently stored under water to avoid fire and explosion on the effect of contact with the air. Even under such storage the catalyst looses its activity due to the oxygen and other components dissolved in the water. Metal preparations of spongy structure suitable for catalytic use, beside the nickel, may also be prepared by similar techniques from other metals capable for hydrogenation (ruthenium, copper, noble metals, etc.). In the present description we refer to nickel, because researchers in the pharmaceutical and oil industry will carry out their first hydrogenating, oxidation-reduction experiments of reference character by using commercially available Raney-nickel catalyst.

Oden and his co-workers in their patent (US 4049580) summarized the solutions protected as intellectual products, relating the preparation of Raney-nickel catalysts. As they describe, the well-known Raney-nickel hydrogenation catalysts and supports may be prepared by various methods. According to U.S. 3,637,437 patent of Goldberger, Raney catalyst is coated to a substrate by flame spraying and from the aluminum alloy the aluminum is leached out by alkali. Although, by this method a very active catalyst was produced, during usage it pelleted, collapsed. In another method (Larson, U.S. 3,846,344 patent) aluminum and nickel are deposited electrolytically, or by flame spraying or by depositing from vapour phase, and the active catalyst is formed via interdiffusion of the metals in one another. Under the wet conditions mainly Ni₂Al₃ is formed. This technique, however, did not turn out to be appropriate, because beside others, the activation of the catalyst was difficult. The resulting catalyst was not suitable for the task, because during leaching out the aluminum, different layers with different alloy compositions had formed. According to the cited patent specification a relatively thick NiAl₃ layer is formed on the nickel support. This thick layer is the starting layer of the Raney-nickel catalyst, which is gained by coating molten aluminum or aluminum-nickel alloy to a nickel support, the specimen is then subjected to heat treatment at a temperature higher than the melting point of the alloy (700 - 1133° C) chilled to 640 - 750° C to gain the NiAl₃. From the coated specimen aluminum is leached with sodium hydroxide to obtain the supported (spongy) Raney-nickel catalyst. The claimed solution lies in the composition of the salt-melt obtained during the heat treatment.

More extensive application of the above Raney type catalysts - especially in industrial usage, in continuous technologies - is restricted by their weak mechanical strength and relatively fast decrease of activity.

There are processes known trying to improve these drawbacks by colloid chemistry-based powder metallurgical methods, leading to skeleton-structured catalysts containing active metals.

There are furthermore processes known where an open-cell polyurethane foam is first coated with the active metal, and then the polyurethane is removed by heat treatment. The remaining metal foam has practically similar structure as the original polyurethane foam, its foam walls are, however, empty. Poor mechanical and catalytic characteristics of the resulting metal foams, as well as the expensive and complicated process to coat the active metal to the surface of the polyurethane foam (Electrochemical deposition: European Patent Application, 0,151,064, vapour deposition: US Patent 5,011,638.) mean, however severe challenge for the industrial experts!

Our object was to eliminate the above drawbacks and prepare a metal foam catalyst family of fully new approach, which may be used economically even under industrial conditions.

We came to the surprising discovery that in these critical applications in question, the catalyst has to be self-supporting and self-cleaning. The criteria have to be fulfilled that the catalyst keeps its structural integrity, it can be regenerated repeatedly, and even after multiple regenerations the catalyst is able to effectively catalyze the chemical reaction. In the mechanism of action of catalytic reactions decisive steps are that the reaction partners reach the active surface of the catalyst, bind appropriately to the active surface, by forming transition compound on the active centre significantly lower the activation energy required for the reaction between the reaction partners, bound to the surface of the catalyst the desired reaction takes place, and at the end of the reaction the reaction product leaves the surface to make it free for the next reaction cycle. Binding of materials other than the planned reaction partners onto the surface of the catalysts decreases the active surface. Blocking of the active centres may be reversible or irreversible. The activity of the catalyst may be, to a certain level, regenerated by liberating the surface following a reversible binding. The faster the active centre is blocked, the often a regeneration cycle is required. By choosing suitable support, the length of the regeneration cycles may be elongated and the number of possible regenerations may be increased.

According to the above, the subject-matter of our invention is a process for the preparation of self-supporting, self-cleaning open-cell metal foams containing at least one of the following transition metals: Ag, Au, Co, Ni, Cr, Cu, Fe, Ir, Mn, Mo, Nb, Os, Pd, Pt, Re, Rh, Ru, Ta, Tc, W, and/or at least one of the following non-metals: Ge, Sb, Si, comprising that
i) a polyurethane composite foam is prepared from the liquid components A and B being of a polyurethane foam and from the particle suspension of at least one of transition metal oxide and/or at least one of non-metal oxide, where A is a polyol, and B is a diisocyanate or its derivative, and the particle suspension of at least one of transition metal oxide and/or at least one of non-metal oxide is
   a) mixed with the mixture of the liquid components A and B, or
   b) mixed with liquid component A and then liquid component B is added, or
   c) mixed with liquid component B and then liquid component A is added, or
   d) mixed separately with liquid component A and liquid component B, and the resulting mixtures are then mixed with each other, and
ii) the thus obtained polyurethane, and optionally an additional source of elemental carbon like graphite or graphite powder, is subjected to to a stepwise heat treatment in vacuum in the presence of a least a stoichiometric amount of elemental carbon in an amount sufficient to fix the oxygen present in the reactor, wherein the organic material is first decomposed, and the metal and/or non-metal oxide particles are reduced, in the presence of elemental carbon at a temperature below the melting point of the metal and/or non-metal particles, and then by further increasing the temperature for sintering the metal and/or non-metal particles thus gradually increasing the mechanical stability of the metal or non-metal foam,
iii) optionally the obtained metal foam is subjected to heat treatment in the air or in an oxygen-containing medium for cleaning it from carbon contamination, and the resulting transition metal oxide or non-metal oxide is then reduced by heat treatment in vacuum, in the presence of the amount of elemental carbon necessary to fix the oxygen present in the reactor, at a temperature below the melting point of the transition metal oxide or non-metal oxide, and
iv) optionally the metal on the surface of the foam may be exchanged by treatment with the solution of a metal which is more electropositive than the transition metal or non-metal constructing the metal foam.

In the process according to the invention the components which may be used as component A and B are for example:
as component "A" (polyol):
   - Lupranol 3300 (a glycerine-based trifunctional polyether-polyol derivative)
   - Lupranol 3504/1 (a trimethylolpropanebased polyether-polyol derivative with secondary hydroxyl groups)
   - Luprophen 1901/1 (a dicarboxylane acid-based difunctional polyester-polyol),
as component "B"(isocyanate):
   - hexamethylene-1,6-diisocyanate (HDI or HMDI)
   - methane-diphenyl-diisocyanate (MDI)
   - polymethylene-polyphenyl-polyisocyanates (PAPI)
   - 1,4-phenylene-diisocyanate (PADI)
   - 3,3-dimethyl-biphenylene-4,4-diisocyanate (TODI),
and of course, other known polyol and isocyanate derivatives may also be used.

The particle suspension of the transition metal or non-metal oxides is applied in an amount of 0.1-50 vol%, preferably 10-30 vol%, as compared to the total amount of components A and B, where the particle size of the applied transition metal or non-metal oxides thereof is 0.1-100 µm, preferably 1-10 µm.

Graphite or graphite powder as an oxygen binding carbon agent has to be employed in an at least stoichiometric amount.

If the obtained metal foam is contaminated with carbon, it is subjected to heat treatment in the air or in an oxygen-containing medium and the resulting transition metal oxide or non-metal oxide is then reduced by heat treatment in vacuum, if necessary in the presence of calculated amount of carbon, at a temperature below the melting point of the transition metal oxide or non-metal oxide.

According to another embodiment, the metal on the surface of the foam may be exchanged by treatment with the solution of a metal which is more electropositive than the transition metal or non-metal constructing the metal foam.

The self-supporting, self-cleaning open-cell metal foams according to our invention having specific surface of 1-750 m²/g, preferably 50-150 m²/g and average pore diameter 10-500 µm, preferably 100-200 µm., containing at least one transition metal and/or non-metal, may economically be applied as catalysts in hydrogenation and oxidation processes, also in industrial scale.

In accordance with the above, the subject of the invention is preparation and application of self-supporting, self-cleaning catalysts suitable for hydrogenation and oxidation tasks, wherein the active metal components are transition metals or non-metals and/or their mixtures (alloys). Their preparation is carried out by introducing the active material, as a colloidal structure into the production process of a polyurethane foam, and transforming the resulting composite-foam system by metallurgical methods and vacuum treatment - after decomposition of the organic structural elements - into a spongy, skeleton-structured cluster material possessing average pore size between 10-500 µm, typically 100-200 µm, and specific surface area between 1-750 m²/g, typically 50-150 m²/g. It is excellently suitable to carry out catalytic reactions and capable for multiple and repeated in situ regenerations. Surprising discovery of the invention is that the colloidal structure containing the active material is formed by polymerisation of the components suitable for the object at the same time, activation of the catalyst is then effected with thermal treatment of the polymer, therefore the skeleton structure is self-supporting and may be cleaned by an appropriate extraction method, preferably with a material used for washing off the material to be catalyzed.

According to our invention the polyurethane foam formation (polymerisation) and the colloidal dispersion of the active metal oxides are carried out in one technological step. From the prepared solid composite polyurethane foam the metal foam, non-metal foam is prepared by in vacuo thermal decomposition (reduction) of the oxide particles of the applied transition metal oxides or non-metal oxides, in the presence of elemental carbon (or other suitable oxygen-getter) at a temperature below the melting point of the metal, non-metal. With the time, the obtained metal particles start to sinter, resulting in the gradual increase of the mechanical stability of the metal foam.

Further details of the invention are demonstrated by the following examples, without limiting the scope of the invention, which is defined by the appended claims, to the examples.

The examples refer to the following Figures:

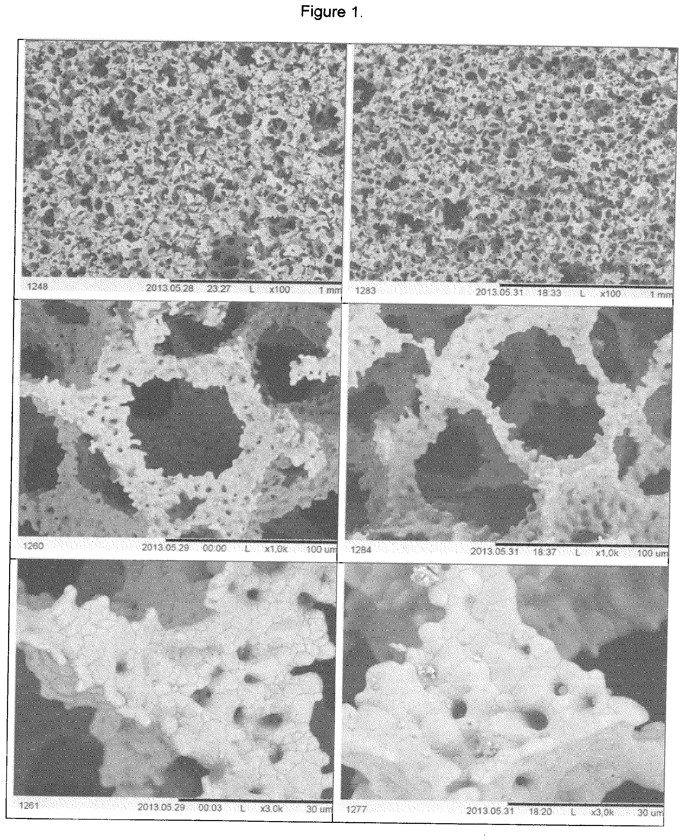

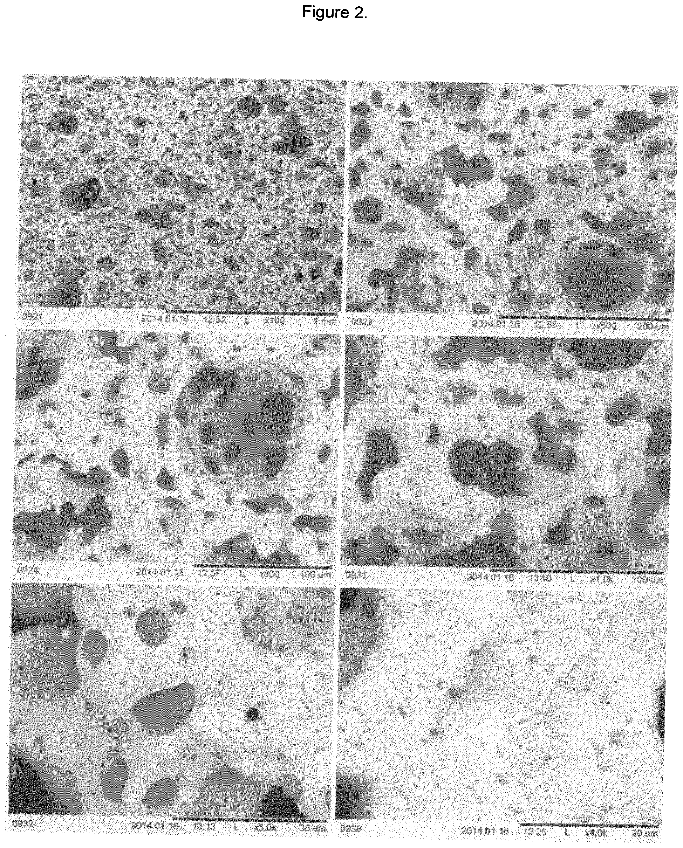

Figure 1.: Scanning electron microscopic picture of the polished cross-section of a non-sintered (Figures on the left) and of a sintered (Figures on the right) Ni-foam sample, in different enlargements (in the bottom see: the cell walls grown together from the individual particles) Figure 2.: Electron microscopic pictures of a copper foam final product

### Example 1.

In 39.5 g of commercially available (e.g. Borsodchem Zrt. - PUR-hab^{R}) component "A" (polyol) suitable for polyurethane foam formation is dispersed 100 g of NiO fraction smaller than 10 micrometer. In a similar manner, in 60.5 g of component "B" of polyurethane foam formation (isocyanate) is dispersed 150 g of NiO fraction smaller than 10 micrometer.

Components "A" and "B" which contain the NiO in complete dispersion are then united and homogenized by vigorous agitation at room temperature. After the polymerisation process has started and completed, a voluminous, green-coloured composite polyurethane foam is obtained which contains the NiO particles in colloidal dispersion. This foam block is cut by a cutting device into cubes of approx. 12 mm edge length.

The cut-to-size PUR/NiO-foam cubes are placed into a steel melting pot provided with closable lid with vacuum stump, in such a way that between 1-1 rows of foam cube a graphite sheet is placed, supported with steel distance holders. The steel pot is then closed, flushed with argon gas, placed under vacuum, put into an electric furnace and heated according to a programmed heating cycle.

The nominal heating program of the oven is demonstrated in Table 1.

**Table 1.**

| temperature [°C] | time kept on that | pressure [mbar] | |
|---|---|---|---|
| | temperature [min] | vacuum | Ar: +p |
| 50 | | 2x10⁻¹ | 0.,5 |
| 150 | 15 | 2x10⁻¹ | 0.5 |
| 330 | 15 | 2x10⁻¹ | 0.5 |
| 530 | 20 | 3-6x10⁻¹ | 0.5 |
| 1100 | 180 | 2x10⁻¹ | 1.1 |

| | | | |
|---|---|---|---|
| Speed of heating-up: 500 °C/h | | | |

The mass of the Nickel-foam obtained after spontaneous chilling of the furnace showed less than 1% difference from the value theoretically calculated from the NiO content of the composite polyurethane foam. Their size showed an approx. 8-time volume contraction compared to the original size of the composite polyurethane foam. Their density was in an average 0.70 g/cm³. Based on the density of the Ni block (8.9 g/cm³) it means a metal foam porosity of approx. 92%! The Ni-foam obtained in this way exhibits appropriate mechanical integrity. The performed electron microscopic studies reveal a mainly sintered Ni structure (Figure 1.).

### Example 2.

In a similar manner as described in Example 1., from 39.5 g of commercially available (Borsodchem) component "A" suitable for the preparation of polyurethane foam, and from 60.5 g of component "B", by use of 250 g of copper(I)-oxide (Cu₂O) a composite polyurethane foam is prepared.

The cut-to-size PUR/Cu₂O composite foam cubes are subjected to vacuum heat treatment as described in Example 1., with the difference that the final heating program lasts 3 hours at 900°C.

As a result a sintered copper-foam of appropriate mechanical integrity is obtained in nearly theoretical amount. Its structure is well proven by the pictures of the performed electron microscopic investigation (Hitachi TM-1000) (Figure 2.).

### Example 3.

In a similar manner as described in Example 1., from 39.5 g of component "A", from 60.5 g of component "B", and 250 g of 1:1 molar ratio mixture of NiO and Cu₂O a composite polyurethane foam is prepared.

The cut-to-size PUR/Cu₂O-NiO composite foam cubes are subjected to vacuum heat treatment as described in Example 1. In the final stage of the heat treatment the temperature is kept at 1000°C for 1.5 hours. As shown by the performed SEM pictures and elemental analysis, the resulting metal-foam is proven to be the homogenous alloy of nickel and copper. Density of the metal-foam is 0.74 g/cm³.

### Example 4.

13.54 g of silver oxide is dispersed in 4.753 g of commercially available (Borsodchem) polyurethane-forming component "B" and then 3.665 g of component "A" is mixed to it. The obtained composite polyurethane foam which contains the silver oxide, is then subjected to vacuum heat treatment as described in Example 1. In the final stage of the heat treatment the temperature is kept at 850°C for 1 hour. The resulting metal foam which still contains carbon, is then treated at 700 °C in atmospheric air for 1.5 hours. Density of the resulting sintered silver foam is 0.6 g/cm³. Its mechanical characteristics are good, it can be considered as self-supporting!

### Example 5.

An acid-proof 500 ml bomb-reactor was charged with 100 ml of toluene and 5 g of the Ni foam (slightly powdered) prepared according to Example 1., the reactor was then equipped with magnetic stirrer and flushed with hydrogen by filling it to 2*10 bar and decreasing the pressure to 2 bar between the two flushing. For the reaction the pressure was increased with hydrogen to 10 bar, the reactor was then heated on a magnetic heat stirrer to 240°C, the mixture was stirred at a speed of 300 rot/sec for 20 minutes. The reactor was then cooled under running water to room temperature and the pressure was reduced to atmospheric. Even after 20 minutes of reaction the fall of the pressure demonstrated the uptake of hydrogen in the hydrogenation reaction. The catalyst was then collected by filtration, the liquid was analysed by gas chromatography. We established that the conversion was 44%, the catalyst (by sight) was not damaged. For a comparison, we carried out the experiment with commercially available Raney-nickel catalyst, under similar conditions. The Raney-nickel catalyst powder stuck to a slurry, saturating efficiency of the hydrogenation was 52%. It can be stated that by heterogeneous catalysis in a bomb-reactor we reached, beside the higher mechanical stability, an efficiency which is comparable with that of the standard industrial catalyst.

### Example 6.

The toluene saturation reaction showed in Example 5. was carried out in a continuous tube reactor. Sizes of the tube reactor: inner diameter 20 mm, wall thickness 2 cm, 316L acid-proof material, electric heating and Swagelok equipment including catalyst holder plate. Length of the reactor: 15 cm, the catalyst was added at a height of 7 cm. 22 ml of the reactor was filled with the catalyst, the remaining 25 ml with 5 mm acid-proof Rashig rings to promote the preheating. Addition of the toluene was regulated so that it stays in the catalyst zone as long as described in Example 5. The amount of hydrogen was 50:1 (mol:mol), the pressure in the reactor was regulated to 20 bar, the temperature to 240 °C. We succeeded to saturate 58% of the toluene which, surprisingly, surpassed the conversion reached by using of Raney-nickel catalyst. It is to mention that in the given system the reference catalyst cannot be applied. The saturation conversion remained unchanged for a period of 24 hours. The conversion was followed by gas chromatographic analysis of the samples taken hourly. After the 24 hour saturation task the reactor was dismounted, the catalyst, by sight, remained in an unchanged state, similar to that at the charging.

### Example 7.

In the continuous tube reactor used for the toluene saturation task of Example 6., destroy of harmful material by catalytic oxidation reaction was carried out, applying the catalyst and the inert carrier system in a similar manner as described above. The composition of the raw material and the characteristics of the treated material flow are shown in the table below. The material to be destroyed, obstinately resisting to oxidation reaction, was studied in a 4-fold dilution. The temperature of the reactor was regulated to 180°C, the air inlet to a ratio of 500:1 ml:ml, the volume speed to 0.25 liter/h. In the table the measure of the biological oxygen demand (BOD) was designated as "n.a.", since the material could be taken after neutralisation into biological destroy only in a very high dilution (1:500 vol:vol). The destroyed material was neutralized and adjusted to pH=8 with 1 n NaOH solution to prepare it for the measuring of the biological oxygen demand. Other dilution than that for the neutralisation was not applied. Results are demonstrated in Table 1. For those skilled in the art it is authoritative that the COD:BOD ratio lays near 2:1 to ensure the conditions of the biological treatment. The efficiency expressed in COD (chemical oxygen demand), 95.2%, surpassed by high the expectations. Following the 24 hour wet catalytic oxidation the reactor was stopped, the catalyst was found in its physical state intact. Considering that using nickel catalyst on ZSM5 (aluminosilicate zeolite) support the same task could not be carried out for no longer than 1 hour due to the precipitated coke layer, we stated that in the above example the catalyst prepared according to Example 1., in the course of the wet oxidation shows the signs of self-cleaning. We did not investigate if the surprising self-cleaning process is the result of the formed organic acid soaps or of the high oxygen affinity of the active sites of the catalyst, or of the positive effect of both phenomena. For any case, it is fully unusual that the coke formed during the oxidation of organic materials does not precipitate on the catalyst and it does not have to be removed from the catalyst by ignition or by treatment with strong acid.

**Table 1.**

| Characteristic data of the task of Example 7 to destroy of harmful materials. | | | | | | |
|---|---|---|---|---|---|---|
| Characteristics Solution | pH | COD, mg O₂/l | BOD, mg O₂/l | TOC, mg/l | Phenol, mg/l | Oil, mg/l |
| to be destroyed (diluted) | 12.8 | 38500 | n.a. | 40000 | 0,6 | 0.8 |
| destroyed | 12.3 | 1844 | 640 | 972 | <0.01 | 0.13 |

## Claims

1. Process for the preparation of self-supporting, self-cleaning open-cell metal foams containing at least one of the following transition metals: Ag, Au, Co, Ni, Cr, Cu, Fe, Ir, Mn, Mo, Nb, Os, Pd, Pt, Re, Rh, Ru, Ta, Tc, W, and/or at least one of the following non-metals: Ge, Sb, Si, comprising that
i) a polyurethane composite foam is prepared from the liquid components A and B being of a polyurethane foam and from the particle suspension of at least one of transition metal oxide and/or at least one of non-metal oxide, where A is a polyol, and B is a diisocyanate or its derivative, and the particle suspension of at least one of transition metal oxide and/or at least one of non-metal oxide is
a) mixed with the mixture of the liquid components A and B, or
b) mixed with liquid component A and then liquid component B is added, or
c) mixed with liquid component B and then liquid component A is added, or
d) mixed separately with liquid component A and liquid component B, and the resulting mixtures are then mixed with each other, and
ii) the thus obtained polyurethane, and optionally an additional source of elemental carbon like graphite or graphite powder, is subjected to to a stepwise heat treatment in vacuum in the presence of a least a stoichiometric amount of elemental carbon in an amount sufficient to fix the oxygen present in the reactor, wherein the organic material is first decomposed, and the metal and/or non-metal oxide particles are reduced, in the presence of elemental carbon at a temperature below the melting point of the metal and/or non-metal particles, and then by further increasing the temperature for sintering the metal and/or non-metal particles thus gradually increasing the mechanical stability of the metal or non-metal foam,
iii) optionally the obtained metal foam is subjected to heat treatment in the air or in an oxygen-containing medium for cleaning it from carbon contamination, and the resulting transition metal oxide or non-metal oxide is then reduced by heat treatment in vacuum, in the presence of the amount of elemental carbon necessary to fix the oxygen present in the reactor, at a temperature below the melting point of the transition metal oxide or non-metal oxide, and
iv) optionally the metal on the surface of the foam may be exchanged by treatment with the solution of a metal which is more electropositive than the transition metal or non-metal constructing the metal foam.

2. Process as defined in Claim 1., comprising that the particle suspension of the transition metal or non-metal oxides is applied in an amount of 1-50 vol%, preferably 10-30 vol%, as compared to the total amount of components A and B.

3. Process as defined in Claim 2., comprising that the particle size of the applied transition metal or non-metal and/or-oxides is 0.1-100 µm, preferably 1-10 µm.

4. Process as defined in Claim 1., comprising that the metal exchange on the surface of the obtained foam is carried out by treatment with the solution of a metal which is more electropositive than the transition metal or non-metal constructing the metal foam.

## Patentansprüche

1. Verfahren zur Herstellung von selbsttragenden, selbstreinigenden offenzelligen Metallschäumen enthaltend mindestens eines der folgenden Übergangsmetalle: Ag, Au, Co, Ni, Cr, Cu, Fe, Ir, Mn, Mo, Nb, Os, Pd, Pt, Re, Rh, Ta, Tc, W und/oder mindestens eines der folgenden Nichtmetalle: Ge, Sb, Si, **dadurch gekennzeichnet, dass**
i) ein Polyurethan-Verbundschaum aus den flüssigen Komponenten A und B eines Polyurethanschaumes, wobei A ein Polyol und B ein Diisocyanat oder dessen Derivat ist, und aus der Partikelsuspension eines Übergangmetalloxydes und/oder Nichtmetalloxydes hergestellt wird, wobei die Partikelsuspension von mindestens einem von Übergangsmettalloxiden und/oder einem von Nichtmetalloxiden
a.) mit der Mischung der flüssigen Komponenten A und B vermischt wird, oder
b.) mit der flüssigen Komponente A vermischt wird, wonach die flüssige Komponente B zugegeben wird, oder
c.) mit der flüssigen Komponente B vermischt wird, wonach die flüssige Komponente A zugegeben wird, oder
d.) getrennt mit flüssiger Komponente A und flüssiger Komponente B vermischt werden wonach die resultierenden Mischungen miteinander vermischt werden, und
ii) der so erhaltene Polyurethan -Verbundschaum (-Komposition) und gegebenenfalls eine zusätzliche Quelle für elementaren Kohlenstoff, wie Graphit oder Graphitpulver, einer schrittweisen Wärmebehandlung im Vakuum in Gegenwart von mindestens einer stöchiometrischen Menge an elementaren Kohlenstoff untergezogen wird, um den im Rektor vorhandenen Sauerstoff zu fixieren, wobei das organische Material zersetzt wird und die Metall- und/oder Nichtmetalpartikel in Gegenwart von elementarem Kohlenstoff bei einer Temperatur unterhalb des Schmelzpunktes der Metall- oder Nichtmetallpartikel reduziert werden, wonach die Temperatur zum Sintern der Metall- und/oder Nichtmetallpartikel erhöht wird um die mechanische Stabilität des Metall- oder Nichtmetallschaums zu erhöhen, und.
iii) gegebenenfalls der erhaltene Metallschaum einer Wärmebehandlung an der Luft oder in einem sauerstoffhaltigen Medium untergezogen wird, um ihn von Kohlenstoffverunreinigungen zu reinigen, wonach das resultierende Übergangsmetalloxyd durch Wärmebehandlung im Gegenwart von elementarem Kohlenstoff zur Fixierung des im Reaktor vorhandenen Sauerstoffs bei einer Temperatur unterhalb des Schmelzpunktes des Übergangsmetalloxyds oder Nichtmetalloxyds reduziert wird, und
iv) optional das Metall auf der Oberfläche des Schaums durch Behandlung mit der Lösung eines Metalls, das elektropositiver ist als das Übergangsmetall oder Nichtmetall, aus dem der Metallschaum besteht, ausgetauscht wird.

2. Verfahren nach Anspruch 1, **dadurch gekennzeichnet, dass** die Partikelsuspension der Übergangsmetall- oder Nichtmetalloxyde in einer Menge von 1-50 Vol.% vorzugsweise 10-30 Vol. %, im Vergleich zur Gesamtmenge der Komponenten A und B verwendet wird.

3. Verfahren nach Anspruch 2, **dadurch gekennzeichnet, dass** die Partikelgröße der verwendeten Übergangsmetall- oder Nichtmetalloxyde 0,1-100 µm, vorzugsweise 1-10 µm beträgt.

4. Verfahren nach Anspruch 1, **dadurch gekennzeichnet, dass** der Metallaustausch an der Oberfläche des erhaltenen Schaums durch Behandlung mit der Lösung eines Metalls, das elektropositiver ist als das Übergangsmetall oder Nichtmetall, aus dem der Metallschaum besteht, durchgeführt wird.

## Revendications

1. Procédé de préparation de mousses de métal autosupportantes, autonettoyantes à cellules ouvertes contenant au moins un des métaux de transition suivants : Ag, Au, Co, Ni, Cr, Cu, Fe, Ir, Mn, Mo, Nb, Os, Pd, Pt, Re, Rh, Ta, Tc, W et/ou au moins un des non métaux suivants : Ge, Sb, Si, **caractérisé en ce que**
i) on prépare une mousse de polyuréthane composite à partir des composants liquides A et B d'une mousse de polyuréthane et à partir de la suspension de particules d'au moins un oxyde de métal de transition et/ou un oxyde de non métal, où A est un polyol et B un diisocyanate ou un de ses dérivés, procédé selon lequel la suspension de particules d'au moins un oxyde de métal de transition et/ou au moins un oxyde de non métal, est
a) mélangée avec le mélange des composants liquides A et B, ou
b) mélangée avec le composant liquide A puis le composant liquide B est ajouté, ou
c) mélangée avec le composant B liquide puis le composant A liquide est ajouté, ou
d) mélangée séparément avec le composant liquide A et le composant liquide B puis les mélanges obtenus sont ensuite mélangés l'un avec l'autre, et
ii) on soumet le polyuréthane ainsi obtenu, et éventuellement une source additionnelle de carbone élémentaire comme du graphite ou de la poudre de graphite, à un traitement à chaud par étapes sous vide en présence d'au moins une quantité stoechiométrique de carbone élémentaire en une quantité suffisante pour fixer l'oxygène présent dans le réacteur, ainsi la matière organique est d'abord décomposée, et les particules de métal et/ou de non métal sont réduites, en présence de carbone élémentaire à une température inférieure au point de fusion des particules de métal et/ou non métal, puis en augmentant la température de manière à fritter les particules de métal et/ou de non métal augmentant ainsi graduellement la stabilité mécanique de la mousse de métal ou de non métal,
iii) on soumet éventuellement la mousse de métal obtenue à un traitement à la chaleur à l'air ou dans un milieu contenant de l'oxygène pour la nettoyer de la contamination au carbone, puis l'oxyde de métal de transition en résultant est ensuite réduit par traitement à la chaleur sous vide, en présence de la quantité de carbone élémentaire pour fixer l'oxygène présent dans le réacteur, à une température inférieure au point de fusion de l'oxyde de métal de transition ou de l'oxyde de non métal, et
iv) éventuellement le métal à la surface de la mousse peut être échangé par traitement avec la solution d'un métal qui est plus électropositif que le métal de transition ou le non métal construisant la mousse de métal.

2. Procédé selon la revendication 1, **caractérisé en ce que** la suspension de particules des oxydes de métal de transition ou de non métal est utilisée en une quantité de 1 à 50% en volume, de préférence de 10 à 30% en volume, par rapport à la quantité totale des composants A et B.

3. Procédé selon la revendication 2, **caractérisé en ce que** la taille des particules des oxydes de métal de transition ou de non métal est de 0,1-100 um, de préférence 1-10 um.

4. Procédé selon la revendication 1, **caractérisé en ce que** l'échange de métal à la surface de la mousse obtenue est effectué par traitement avec une solution d'un métal qui est plus électropositif que le métal de transition ou le non métal construisant la mousse de métal.
